# EUROPÄISCHE PATENTSCHRIFT

(11) **EP 2 188 084 B1**
(45) Veröffentlichungstag und Bekanntmachung des Hinweises auf die Patenterteilung: **25.02.2015**
(21) Anmeldenummer: 08802047.4
(22) Anmeldetag: 11.09.2008
(51) Int. Cl.: B23B 31/00, B23B 51/00, B23Q 3/12

(54) **WERKZEUGAUFNAHME SOWIE MESSTASTER MIT EINER WERKZEUGAUFNAHME**
TOOL HOLDER AND MEASURING SENSOR HAVING A TOOL HOLDER
PORTE-OUTIL ET SONDE DE MESURE DOTEE D'UN PORTE-OUTIL

(30) Priorität: 11.09.2007 DE 102007043030
(43) Veröffentlichungstag der Anmeldung: 26.05.2010
(73) Patentinhaber: m & h inprocess messtechnik GmbH, 88289 Waldburg (DE)
(72) Erfinder: MADLENER, Wolfgang, 88212 Ravensburg (DE); VEIL, Wilfried, 88212 Ravensburg (DE)
(74) Vertreter: Dobler, Markus
(86) Internationale Anmeldenummer: PCT/EP2008/007487
(87) Internationale Veröffentlichungsnummer: WO 2009/033686

(56) Entgegenhaltungen:
- EP-A1- 1 084 782
- WO-A-2006/043170
- DE-A1- 4 009 461
- DE-A1-102006 039 258

## Beschreibung

Die Erfindung betrifft eine Werkzeugaufnahme nach dem Obergebriff des Anspruchs 1 sowie ein Messtaster mit einer Werkzeugaufnahme.

### Stand der Technik:

Eine Werkzeugmaschine zur z.B. Hochgeschwindigkeitsbearbeitung, wie Hochgeschwindigkeitsfräsen weist normalerweise eine so genannte Motorspindel auf, die eine sich drehende Spindelwelle und ein Wellengehäuse besitzt, in welchem die Spindelwelle gelagert ist. Bei den enormen Umdrehungsgeschwindigkeiten der Spindelwelle bei der Hochgeschwindigkeitsbearbeitung erwärmt sich diese und auch das Wellengehäuse. Daher ist das stehende Wellengehäuse einer Spindel mit einer Kühlung ausgestattet.

Die Wärme kann jedoch nicht vollständig durch das Kühlsystem abgeführt werden. Dadurch findet ein Wärmeeintrag auf die in der Werkzeugspindel eingespannte Werkzeugaufnahme und das darin befestigte Werkzeug statt. Bei einem Wechsel einer Werkzeugaufnahme hat diese zunächst Umgebungstemperatur, ebenso ein darin angeordnetes Werkzeug, wie z.B. ein Messtaster.

Die "warme" Spindel erwärmt die Werkzeugaufnahme und ein eingesetztes Werkzeug. Die Folge dieses Wärmeeintrags ist, dass sich die Werkzeugaufnahme und das Werkzeug längen. Sofern eine solche Dimensionsänderung nicht erfasst wird, kann sie sich nachteilig in einem Prozessschritt, z.B. einer Messung im Hinblick auf deren Genauigkeit auswirken.

Eine Berücksichtigung einer Längenausdehnung der Spindel wird z.B. direkt über Temperatursensoren ermittelt.

In der WO 2006/04371 A2 wird zur Reduzierung thermisch bedingter Präzisionsverluste eines Maschinenkopfs für eine Werkzeugmaschine vorgeschlagen, diesen vollständig aus einem Material mit geringem oder negativen Wärmeausdehnungskoeffizienten zu fertigen.

### Aufgabe und Vorteil der Erfindung:

Der Erfindung liegt die Aufgabe zu Grunde, eine Werkzeugaufnahme vorzuschlagen, mittels der ohne nachteilige Auswirkungen auf die Genauigkeit der damit durchgeführten Bearbeitungsaufgabe auf eine Erfassung von Dimensionsänderungen verzichtet werden kann.

Diese Aufgabe wird durch die Merkmale des Anspruchs 1 sowie 6 gelöst.

In den abhängigen Ansprüchen sind vorteilhafte und zweckmäßige Weiterbildungen der Erfindung angegeben.

Die Erfindung geht zunächst von einer Werkzeugaufnahme zur Anbringung eines Messtasters an einer Werkzeugmaschine mit einer Schnittstelle zu einer Werkzeugmaschine aus. Die Werkzeugaufnahme umfasst von der Schnittstelle für die Spindel aus betrachtet einen Materialabschnitt, der sich vom üblichen Grundmaterial einer Werkzeugaufnahme durch einen kleineren Längenausdehnungskoeffizienten α und/oder eine kleinere Wärmeleitfähigkeit λ unterscheidet. Der wesentliche Aspekt der Erfindung liegt darin, dass sich der Materialabschnitt bei zumindest einem durchgehenden Schnitt quer zur Werkzeugaufnahmeachse durch die Werkzeugaufnahme über mehr als 50 % einer in Achsrichtung projizierten Schnittfläche erstreckt und der Materialabschnitt eine thermische Entkopplung zwischen dem werkzeugseitigen Abschnitt der Werkzeugaufnahme sowie einem darin aufgenommenen Werkzeug von der Werkzeugspindel zur Reduzierung einer Längenänderung auf Grund eines Wärmeeintrags von einer vergleichsweise wärmeren Werkzeugspindel kommend ausbildet.

Durch diese Vorgehensweise kann erreicht werden, dass es zu einem unerwünscht großen Wärmeeintrag in die Werkzeugaufnahme erst gar nicht kommt bzw. eine Wärmeausdehnung, insbesondere Längung vergleichsweise gering bleibt. Damit kann eine Dimensionsänderung durch Wärmeausdehnung auf ein Maß reduziert werden, das für die Bearbeitungsaufgabe noch tolerierbar ist. Beispielsweise wird durch Lage, Dimensionierung und Materialauswahl des Materialabschnitts eine Wärmeausdehnung der Werkzeugaufnahme von der Schnittstelle bis zu einem Werkzeug bei üblichen Temperaturverhältnissen an Motorspindeln nach dem Einsetzen einer Werkzeugaufnahme auf einen Wert von < 2 µm reduziert.

Im Extremfall umfasst der Materialabschnitt die komplette Werkzeugaufnahme bis z.B. zu einem Messtaster. D.h. bei einer solchen Ausführungsform besteht die Werkzeugaufnahme vollständig aus einem Werkstoff mit einem kleineren Längenausdehnungskoeffizient und/oder einer kleineren Wärmeleitfähigkeit.

In einer bevorzugten Ausgestaltung der Erfindung weist der Materialabschnitt einen Längenausdehnungskoeffizienten α von < 5 µ/mK und/oder eine Wärmeleitfähigkeit λ von < 11 W/mK auf. übliche Stahlsorten für eine Werkzeugaufnahme haben regelmäßig einen Längenausdehnungskoeffizienten, der zwischen 12 µm/mK und 16 µm/mK liegt. Durch einen erfindungsgemäßen Materialabschnitt kann somit bei gleichem Wärmeeintrag eine kleinere Ausdehnung erreicht werden. Außerdem lässt sich ein Wärmeeintrag in einen Bereich nach dem Materialabschnitt z.B. in einen Messtaster und in den Materialabschnitt deutlich verzögern. Damit kann beispielsweise ein Messtaster eine Messaufgabe in einer vorgegebenen Zeitspanne mit einer tolerierbaren Längung abarbeiten, was zu einer hohen Messgenauigkeit führt.

In einer bevorzugten Ausgestaltung der Erfindung teilt der Materialabschnitt die Werkzeugaufnahme. Um einen störenden Wärmeeintrag in z.B. einen Messtaster zu vermeiden, kann es aber ausreichend sein, dass sich der Materialabschnitt nicht über die komplette Schnittfläche einer Werkzeugaufnahme erstreckt, sondern nur über einen Teilbereich.

Für eine Längung der Werkzeugaufnahme ist ein wichtiger Parameter, an welcher Stelle sich der Materialabschnitt befindet. Wenn er von der Schnittstelle aus betrachtet vergleichsweise weit entfernt in der Werkzeugaufnahme angeordnet ist, hat das von der Schnittstelle bis zum Materialabschnitt davorliegende Material die Möglichkeit, sich unter Wärmeeintrag unerwünscht auszudehnen. Daher wird im Weiteren vorgeschlagen, dass der Materialabschnitt sich in einem solchen Abstand von einer Berührungsfläche der Schnittstelle zu einer Spindel befindet, dass das Werkzeugaufnahme-Grundmaterial nur noch in einer Dicke verbleibt, die ausreicht, um für die Werkzeugaufnahme eine notwendige Eigenstabilität, insbesondere an der Berührstelle zur Spindel bereitzustellen. Beispielsweise ist die Werkzeugaufnahme ab einer Stelle, die in einem Abstand A zu einer Spindelnase der Werkzeugspindel liegt, in dem Material ausgeführt, das einen kleineren Längenausdehnungskoeffizienten und/oder eine kleinere Wärmeleitfähigkeit besitzt.

Um eine noch effektivere Entkopplung zu erreichen, kann die Werkzeugaufnahme sozusagen "ausgehöhlt" und mit dem Material mit einem geringeren Längenausdehnungskoeffizienten und/oder einer geringeren Wärmeleitfähigkeit, im Folgenden mit Entkopplungsmaterial bzeichnet, ausgefüllt sein, wobei sich auch in einer Querschnittsebene das Entkopplungsmaterial soweit in den Randbereich der Werkzeugaufnahme erstreckt, dass lediglich noch ein Wandbereich in einer vorgegebenen Dicke verbleibt, der ausreicht, um der Werkzeugaufnahme die notwendige Stabilität zu verleihen. Zum Beispiel verbleiben zumindest an einer Querschnittsfläche Wandstärken von < 10 mm zum Entkopplungsmaterial. Noch besser sind 8 mm, 5 mm oder sogar 3 mm. In axialer Richtung kann sich das Entkopplungsmaterial über einen vergleichsweise großen Bereich erstrecken, z.B. über eine Länge von 10 mm, 20 mm, 30 mm oder noch mehr Millimeter. Gegebenenfalls reicht das Entkopplungsmaterial bis zum Messtaster.

Um eine gewünschte kleine Wärmeausdehnung zu erreichen, wird im Weiteren vorgeschlagen, dass der Materialabschnitt derart ausgebildet ist, dass von einer Ebene, in der die Frontfläche der Spindelnase liegt, der kürzeste Abstand im geschnittenen Material zum Materialabschnitt nicht größer als 10 mm ist. Die Wirkung lässt sich noch weiter verbessern, wenn der Abstand < 8 mm, ggf. < 5 mm oder noch besser < 3 mm ist.

### Zeichnung:

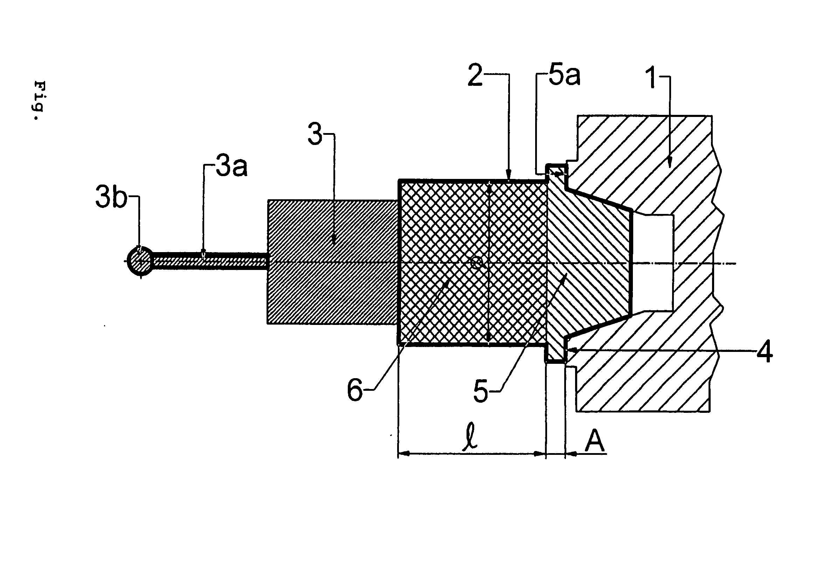

Ein Ausführungsbeispiel der Erfindung ist in einer Zeichnung dargestellt und wird unter Angabe weiterer Vorteile und Einzelheiten nachstehend näher erläutert. Figur 1 zeigt in einem schematischen Schnitt eine Werkzeugaufnahme mit Messtaster, eingesetzt in eine teilweise dargestellte Spindelaufnahme.

### Beschreibung des Ausführungsbeispiels:

In der Figur ist eine Spindel 1 abgebildet, in welcher eine Werkzeugaufnahme 2 mit einer Schnittstelle 5 sitzt, an welcher ein Messtaster 3 angeordnet ist. Der Messtaster 3 besitzt beispielsweise eine Messspitze 3a mit einem Kugelende 3b, z.B. eine Rubinkugel, zur präzisen Antastung von Werkstücken. Die Messspitze 3a ist vorzugsweise mechanisch auslenkbar hochpräzise und positionsreproduzierbar im Messtaster 3 gelagert.

Zwischen dem Messtaster 3 und einer Spindelnase 4 an der Spindel 1 ist ein Materialabschnitt 6 eingefügt, der im Vergleich zum üblichen Material der Werkzeugaufnahme 2 eine kleinere Wärmeleitfähigkeit λ und/oder einen kleineren Wärmeausdehnungskoeffizienten α besitzt. Im Ausführungsbeispiel bildet die Spindelnase 4 gleichzeitig eine Berührfläche mit Plananlage 5a. Der Materialabschnitt 6 weist von der Spindelnase 4 einen Abstand A auf und erstreckt sich über den kompletten Querschnitt auf einer Länge 1. Der Abstand A sollte so bemessen sein, dass bei den üblichen Temperaturverhältnissen an einer Spindel eine Wärmeausdehnung durch Wärmeeintrag in das Material mit der Dicke A nicht größer als 2 µm ist. Der Materialabschnitt 6 besitzt bevorzugt einen Wärmeausdehnungskoeffizienten von < 5 µm/mK°, noch besser einen Wärmeausdehnungskoeffizienten von < 2 µm/mK°. Die Wärmeleitfähigkeit ist vorzugsweise < 11 W/mK°.

Auf diese Weise lässt sich ein Wärmeeintrag von der Spindel 1 in die Werkzeugaufnahme sowie eine Dimensionsänderung durch einen nicht verhinderbaren Wärmeeintrag soweit unterbinden, dass letztlich eine Dimensionsänderung der Werkzeugaufnahme ab Spindelnase nur noch in einer tolerierbaren Größenordnung stattfindet. Damit können mit dem Messtaster 3 Messungen mit der gewünschten Genauigkeit durchgeführt werden, wenn er in die Spindel 1 über die Werkzeugaufnahme 2 eingesetzt ist.

### Bezugszeichenliste:

- 1: Spindel
- 2: Werkzeugaufnahme
- 3: Messtaster
- 4: Spindelnase
- 5: Schnittstelle
- 5a: Berührfläche
- 6: Materialabschnitt

## Patentansprüche

1. Werkzeugaufnahme (2) zur Anbringung eines Werkzeugs, insbesondere Messtasters (3) an einer Werkzeugmaschine mit einer Schnittstelle (5) zu einer Spindel (1) einer Werkzeugmaschine, **dadurch gekennzeichnet, dass** die Werkzeugaufnahme (2) von der Schnittstelle (5) für die Spindel (1) aus betrachtet ab einer Stelle, die sich in einem Abstand "A" zu einer Spindelnase (4) befindet, einen Materialabschnitt (6) umfasst, der in einem Material ausgeführt ist, das sich vom Grundmaterial der Werkzeugaufnahme (2) durch einen kleineren Längenausdehnungskoeffizienten α unterscheidet, und sich bei zumindest einem durchgehenden Schnitt quer zur Werkzeugaufnahmeachse durch die Werkzeugaufnahme über mehr als 50 % einer projizierten Schnittfläche in Achsrichtung erstreckt und eine thermische Entkopplung zwischen dem werkzeugseitigen Abschnitt der Werkzeugaufnahme (2) sowie einem darin aufgenommenen Werkzeug (3) und der Werkzeugspindel (1) zur Reduzierung einer Längenänderung auf Grund eines Wärmeeintrages aus der vergleichsweise wärmeren Werkzeugspindel ausbildet.

2. Werkzeugaufnahme nach Anspruch (1), **dadurch gekennzeichnet, dass** der Materialabschnitt (6) einen Längenausdehnungskoefrizienten α von < 5 µm/mK und/oder eine Wärmeleitfähigkeit λ vcn < 11 W/mK aufweist.

3. Werkzeugaufnahme nach einem der vorhergehenden Ansprüche, **dadurch gekennzeichnet, dass** der Materialabschnitt (6) sich über eine vorgegebene axiale Länge 1 der Werkzeugaufnahme erstreckt, insbesondere die Werkzeugaufnahme teilt.

4. Werkzeugaufnahme nach einem der vorhergehenden Ansprüche, **dadurch gekennzeichnet, dass** der Materialabschnitt (6) sich in einem solchen Abstand von einer Berührfläche (5a) der Schnittstelle (5) zu einer Spindel (1) bzw. der Oberfläche der Werkzeugaufnahme befindet, dass das Werkzeugaufnahme-Grundmaterial in einer Dicke verbleibt, die noch ausreicht, für die Werkzeugaufnahme (2) eine notwendige Eigenstabilität bereitzustellen.

5. Werkzeugaufnahme nach einem der vorhergehenden Ansprüche, **dadurch gekennzeichnet, dass** der Materialabschnitt (6) derart ausgebildet ist, dass von einer Ebene, in der die Frontfläche der Spindelnase liegt, der kürzeste Abstand im geschnittenen Material zum Materialabschnitt (6) nicht größer ist als 10 mm.

6. Messtaster mit einer Werkzeugaufnahme nach einem der vorhergehenden Ansprüche.

## Claims

1. Tool holder (2) for attaching a tool, in particular a measuring sensor (3) onto a machine tool with an interface (5) to a spindle (1) of a machine tool, **characterised in that** the tool holder (2), as viewed from the interface (5) for the spindle (1) from a point which is located at a distance "A" from a spindle nose (4), comprises a material portion (6), which is made from a material which differs from the basic material of the tool holder (2) by having a lower coefficient of linear expansion α, and extends with at least one continuous section perpendicular to the tool holder axis through the tool holder over more than 50% of a projected intersection in axial direction, and forms a thermal decoupling between the tool-side section of the tool holder (2) as well as a tool (3) mounted therein and the tool spindle (1) for reducing a change in length on the basis of an input of heat from the comparatively warmer tool spindle.

2. Tool holder according to claim (1), **characterised in that** the material portion (6) has a coefficient of linear expansion α of <5 µm/mK and/or a heat conductivity λ of <11 W/mK.

3. Tool holder according to one of the preceding claims, **characterised in that** the material portion (6) extends over a predefined axial length 1 of the tool holder, in particular divides the tool holder.

4. Tool holder according to one of the preceding claims, **characterised in that** the material portion (6) is located at such a distance from a contact surface (5a) of the interface (5) to a spindle (1) or the surface of the tool holder that the basic material of the tool holder remains at a thickness which is sufficient for providing the necessary stability for the tool holder (2).

5. Tool holder according to one of the preceding claims, **characterised in that** the material portion (6) is configured in such a way that from a plane in which the front face of the spindle nose lies, the shortest distance in the cut material to the material portion (6) is not greater than 10 mm.

6. Measuring sensor comprising a tool holder according to one of the preceding claims.

## Revendications

1. Porte-outil (2) destiné au montage d'un outil, notamment une sonde de mesure (3), sur une machine-outil avec une interface (5) avec une broche (1) d'une machine-outil, **caractérisé en ce que** le porte-outil (2) comprend à partir d'un endroit se trouvant à une distance « A » d'un nez (4) de la broche, vu de l'interface (5) pour la broche (1), un segment de matériau (6) qui est réalisé dans un matériau qui se distingue du matériau de base du porte-outil (2) par un coefficient de dilatation thermique linéaire (α) plus faible et qui s'étend, dans au moins une section en coupe continue à travers le porte-outil perpendiculairement à l'axe du porte-outil, sur plus de 50 % d'une surface de coupe se projetant en direction axiale, et forme ainsi une rupture thermique entre le segment du porte-outil (2) situé du côté de l'outil ainsi que d'un outil (3) reçu dedans et la broche outil (1) en vue de réduire une variation de longueur due à un apport de chaleur provenant de la broche outil plus chaude en comparaison.

2. Porte-outil selon la revendication 1, **caractérisé en ce que** le segment de matériau (6) présente un coefficient de dilatation thermique linéaire (α) inférieur à 5 µm/mK et/ou une conductibilité thermique (λ) inférieure à 11 W/mK.

3. Porte-outil selon l'une des revendications précédentes, **caractérisé en ce que** le segment de matériau (6) s'étend sur une longueur prédéterminée (I) du porte-outil, en particulier il sépare le porte-outil.

4. Porte-outil selon l'une des revendications précédentes, **caractérisé en ce que** le segment de matériau (6) se trouve à une telle distance d'une surface de contact (5a) de l'interface (5) avec une broche (1) ou de la surface du porte-outil, que le matériau de base du porte-outil est présent avec une épaisseur suffisante pour assurer une stabilité propre suffisante au porte-outil (2).

5. Porte-outil selon l'une des revendications précédentes, **caractérisé en ce que** le segment de matériau (6) est conçu de telle sorte que depuis un plan situé dans la surface frontale du nez de la broche, la distance la plus courte au segment de matériau (6) dans le matériau en coupe n'est pas supérieure à 10 mm.

6. Sonde de mesure avec un porte-outil selon l'une des revendications précédentes.
